# EUROPÄISCHE PATENTSCHRIFT

(11) **EP 1 808 942 B1**
(45) Veröffentlichungstag und Bekanntmachung des Hinweises auf die Patenterteilung: **08.04.2015**
(21) Anmeldenummer: 07000481.7
(22) Anmeldetag: 11.01.2007
(51) Int. Cl.: H01R 39/38, H01R 39/415, H02K 5/14

(54) **Bürsteneinrichtung, insbesondere Hammerbürsteneinrichtung, für einen Elektromotor**
Brush device, in particular a hammer brush device, for an electric motor
Dispositif à balais, en particulier dispositif à balais à marteau, pour moteur électrique

(30) Priorität: 17.01.2006 DE 102006003101
(43) Veröffentlichungstag der Anmeldung: 18.07.2007
(73) Patentinhaber: Dr. Fritz Faulhaber GmbH & Co. KG, 71101 Schönaich (DE)
(72) Erfinder: Kehr, Ulrich, 70771 Leinfelden-Echterdingen (DE); Reinhardt, Gunther, 75181 Pforzheim (DE)
(74) Vertreter: Solf, Alexander

(56) Entgegenhaltungen:
- DE-A1- 2 055 610
- FR-A- 1 358 205
- US-A- 3 851 197

## Beschreibung

Die Erfindung betrifft eine Bürsteneinrichtung, insbesondere eine Hammerbürsteneinrichtung, für einen Elektromotor nach dem Oberbegriff des Anspruches 1.

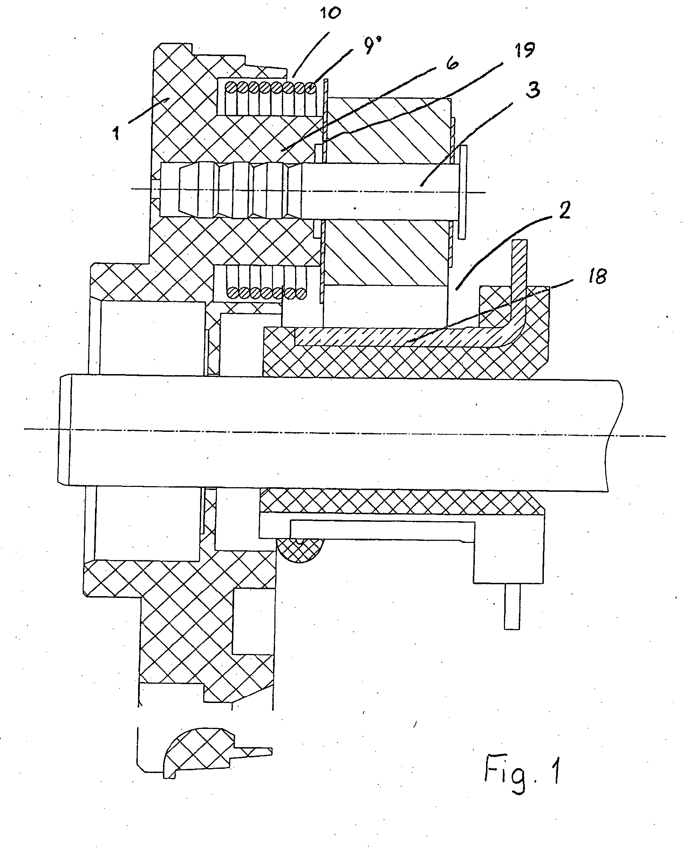

Bürsteneinrichtungen in Form von Hammerbürsteneinrichtungen kommen bei Elektromotoren mit Kupfer-Graphit-Kommutierung zum Einsatz. Fig. 1 zeigt eine solche Hammerbürsteneinrichtung mit einem Deckel 1, der die Bürsteneinrichtung trägt. Zwei Hammerbürsten 2 sind auf je einem Bürstenbolzen 3 gelagert. Jede Hammerbürste 2 wird durch eine Schenkelfeder 10 an einen Kommutator 18 angedrückt. Die Schenkelfeder 10 ist auf einen Dom 6 aufgefädelt, der einstückig mit dem Bürstendeckel 1 verbunden ist. Ein Ende der Schenkelfeder 10 stützt sich im Deckel 1 ab, während das andere Federende mit einem Haken versehen ist, in den die Hammerbürste 2 eingehängt ist. Nachteilig an dieser Konstruktion ist, dass die erste, der Bürste 2 zugewandte Windung 9' der Schenkelfeder 10 durch diese Art der Krafteinleitung radial auf den Dom 6 gedrückt wird und dabei beträchtliche Reibung verursacht. Funktionsbedingt ist zwischen der Bürste 2 und dem Dom 6 axial ein kleiner Spalt 19 vorgesehen, in den die erste Windung 9' ein Stück weit hineinrutschen kann. Die Windung wirkt dann wie ein Keil und verstärkt das Reibungsproblem. Folge hiervon ist eine sehr unregelmäßige Anpresskraft der Bürste 2.

Eine gleichmäßige Bürstenandruckkraft ist jedoch unabdingbar für einen guten Stromübergang zwischen der Bürste 2 und dem Kommutator 18. Ist die Kraft zu klein, kann es zu vermehrter Funkenbildung und im Extremfall zu Anlaufproblemen des Motors kommen. Ist die Kraft zu groß, ist der mechanische Bürstenverschleiß zu hoch.

In der US 3,851,197 wird eine Bürsteneinrichtung für einen Kleinstmotor für Zahnarztgeräte beschrieben, bei dem die Bürsteneinrichtung von einem Deckel getragen wird. Jede Bürste ist mittels eines Haltearmes an einer als Abstützteil einer Feder fungierenden beweglichen Hülse befestigt und mittels der Hülse auf einem Bürstenbolzen gelagert. Die Bürstenbolzen sind in dem Deckel befestigt. Die Feder umgibt die Hülse und ist an einer Seite mit dem Deckel befestigt und an der anderen Seite mit dem Bürstenhalter befestigt und drückt die Bürste über den Haltearm in Richtung eines Kommutators eines Motors. Auch bei dieser Ausführungsform entsteht eine Reibung zwischen den Windungen der Feder und der Hülse, insbesondere im an den Deckel angrenzenden Bereich der Feder.

Der Erfindung liegt die Aufgabe zugrunde, die gattungsgemäße Bürsteneinrichtung so auszubilden, dass eine zumindest weitgehend gleichmäßige Bürstenandruckkraft erzielt wird.

Diese Aufgabe wird bei der gattungsgemäßen Bürsteneinrichtung erfindungsgemäß mit den kennzeichnenden Merkmalen des Anspruches 1 gelöst.

Bei der erfindungsgemäßen Bürsteneinrichtung stützt sich die der Bürste benachbarte Federwindung radial am Abstützteil ab, das drehbar auf dem Bolzen sitzt. Das Abstützteil dreht mit der Bürste. Auf diese Weise wird eine Relativbewegung zwischen der ersten Federwindung zu ihrer Auflage vermieden und die Reibung dadurch minimiert. Die Bürstenandruckkraft ist dadurch gleichmäßig. Diese Kraft ist so groß, dass es zu keiner vermehrten Funkenbildung kommt und der mechanische Bürstenverschleiß minimal ist.

Weitere Merkmale der Erfindung ergeben sich aus den weiteren Ansprüchen.

Die Erfindung wird anhand dreier in den Zeichnungen dargestellter Ausführungsformen näher erläutert. Es zeigen
- Fig. 1: im Schnitte einen Teil einer Bürsteneinrichtung eines Elektromotors nach dem Stand der Technik,
- Fig. 2: in einer Darstellung entsprechend Fig. 1 eine erfindungsgemäße Bürsteneinrichtung für einen Elektromotor,
- Fig. 3: eine zweite Ausführungsform einer erfindungsgemäßen Bürsteneinrichtung eines Elektromotors,
- Fig. 4: eine dritte Ausführungsform einer erfindungsgemäßen Bürsteneinrichtung eines Elektromotors.

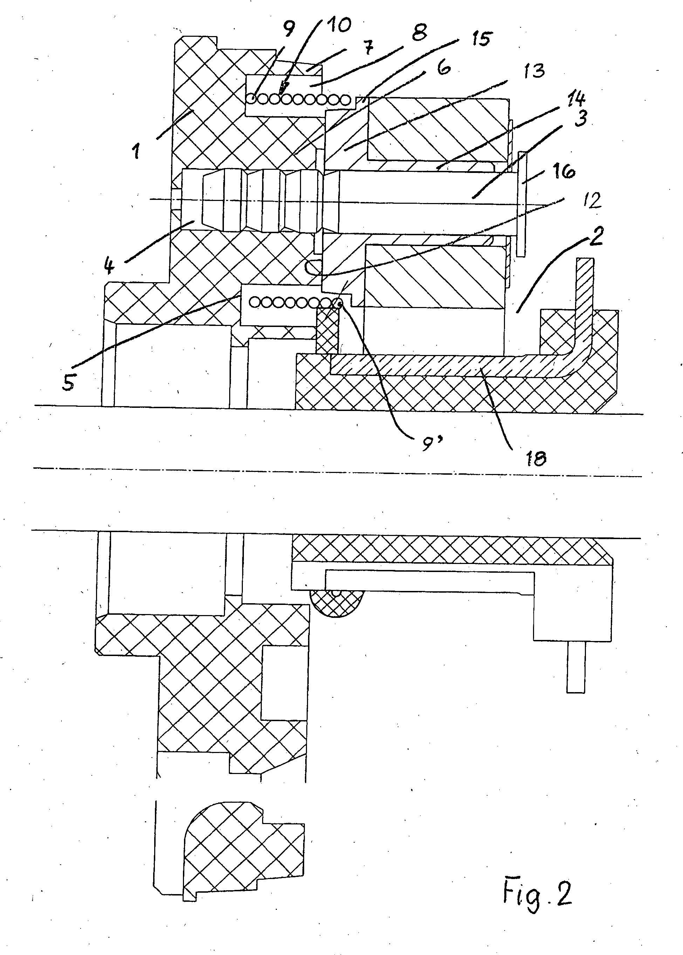

Die Bürsteneinrichtung gemäß Fig. 2 hat den Deckel 1, der vorteilhaft aus elektrisch isolierendem Kunststoff besteht und formsteif ausgebildet ist. Er trägt über seinen Umfang verteilt Hammerbürsten 2, die jeweils auf einem Bolzen 3 begrenzt schwenkbar gelagert sind. In Fig. 2 ist nur einer der Bolzen 3 dargestellt, der in eine den Deckel 1 durchsetzende Öffnung 4 eingepresst ist. Die Öffnung 4 ist in einem über die Rückseite 5 des Deckels 1 vorstehenden Dom 6 vorgesehen, der einstückig mit dem Deckel ausgebildet ist. Entsprechend der Zahl der Bolzen 3 ist auch eine entsprechende Zahl von Domen 6 über den Umfang des Deckels verteilt vorgesehen. Jeder Dom 6 wird mit Abstand von einer Ringwand 7 umgeben. Dadurch wird zwischen dem Dom 6 und der Ringwand 7 ein Ringraum 8 gebildet, in den Windungen 9 einer Schenkelfeder 10 eingreifen. An der Stirnseite 12 des Doms 6 liegt ein verdickter Radialflansch 13 einer Buchse 14 an. Sie sitzt auf dem Bolzen 3. Der Radialflansch 13 hat an seiner der Hammerbürste 2 zugewandten Seite einen umlaufenden radialen Vorsprung 15, an dem die der Hammerbürste 2 benachbarte Windung 9' der Schenkelfeder 10 anliegt. Der Flansch 13 liegt zwischen dem Dom 6 und der Stirnseite der Hammerbürste 2, die auf der Buchse 14 sitzt. Der Bolzen 3 ragt über die Hammerbürste 2 vor und hat einen dünnen Kopf 16. Er liegt an der dem Radialflansch 13 gegenüberliegenden Stirnseite der Hammerbürste 2 an und sichert diese auf der Buchse 14.

Die Schenkelfeder 10 ist mit einem hakenförmigen Ende in die Hammerbürste 2 eingehängt. Sie wird dadurch in Drehrichtung belastet und gegen den Kommutator 18 gedrückt.

Die Buchse 14 nimmt mit ihrem Radialflansch 13 die erste, der Hammerbürste 2 zugewandte Windung 9' auf und stützt diese radial ab. Der radiale Vorsprung 15 verhindert, dass die Federwindung 9' vom Radialflansch 13 in Richtung Bürste 2 abrutscht. Die Buchse 14 sitzt drehbar auf dem Bolzen 3 und dreht somit mit der Hammerbürste 2 mit. Dadurch wird eine Relativbewegung dieser ersten Federwindung 9' zu ihrer Auflage 13 vermieden, wodurch die Reibung erheblich vermindert wird.

Aufgrund der Buchse 14 mit dem Flansch 13 wird verhindert, dass die der Hammerbürste 2 benachbarte erste Windung 9' der Schenkelfeder 10 zwischen der Hammerbürste 2 und dem Dom 6 eingeklemmt wird. Der Außendurchmesser des umlaufenden Vorsprunges 15 des Flansches 13 ist größer als der Durchmesser des Flansches 13. Die Windung 9' kann dadurch nicht zwischen den Flansch 13 und die Hammerbürste 2 gelangen. Somit ist gewährleistet, dass die Hammerbürste 2 gleichmäßig an den Kommutator 18 angedrückt wird, so dass ein guter Stromübergang zwischen der Hammerbürste 2 und dem Kommutator 18 gewährleistet ist. Der mechanische Bürstenverschleiß ist zudem gering, da infolge der drehbar auf dem Bolzen 3 gelagerten Buchse 14 sichergestellt ist, dass zwischen der der Hammerbürste 2 zugewandten ersten Windung 9' und dem Radialflansch 13 der Buchse 14 keine Reibung durch Relativbewegung auftritt.

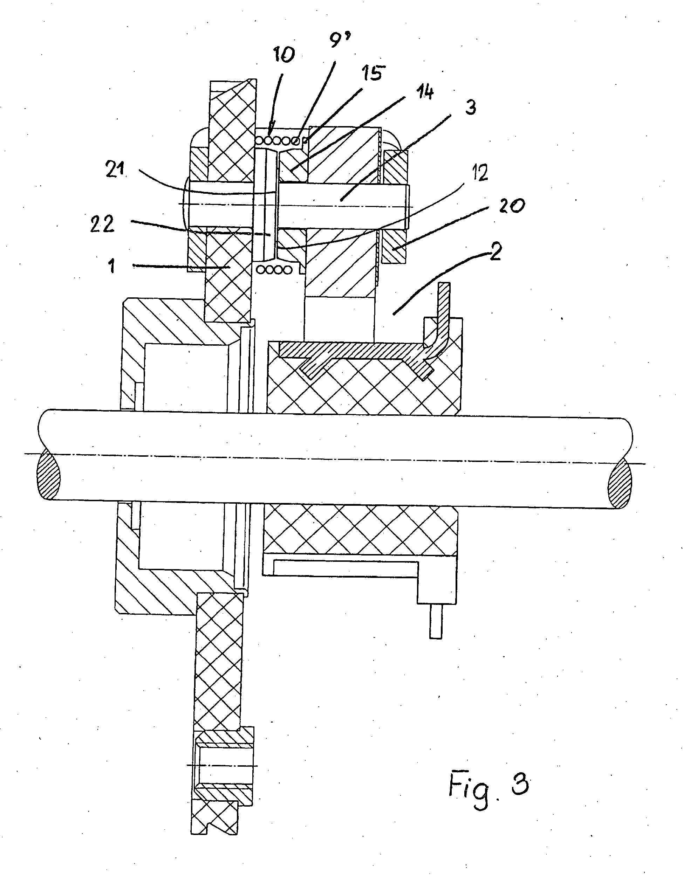

Fig. 3 zeigt ein weiteres Ausführungsbeispiel, das prinzipiell gleich gestaltet ist wie die Ausführungsform nach Fig. 2. Im Deckel 1 sind die Bolzen 3 gelagert, auf denen die Hammerbürsten 2 sitzen. Die Bolzen 3 und die Hammerbürsten 2 sind wiederum über den Umfang des Deckels 1 verteilt angeordnet. In Fig. 3 ist nur ein Bolzen 3 sowie nur eine Hammerbürste 2 dargestellt. Der Bolzen 3 durchsetzt den Deckel 1 sowie die Hammerbürste 2. Der Bolzen 3 ist fest mit dem Deckel 1 verbunden. Die Bürste 2 ist drehbar auf dem Bolzen 3 gelagert. Auf dem über die Hammerbürste 2 überstehenden Ende des Bolzens 3 ist ein Sicherungsteil 20 befestigt, welches die Bürste axial sichert.

An der dem Deckel 1 zugewandten Seite der Hammerbürste 2 befindet sich die Buchse 14, die den radial nach außen ragenden flanschartigen Vorsprung 15 aufweist. Im Unterschied zur Ausführungsform nach Fig. 2 sitzt die Hammerbürste 2 unmittelbar auf dem Bolzen 3.

Der Bolzen 3 trägt einen flanschartigen Vorsprung 22. Die Buchse 14 liegt mit ihrer ebenen Stirnseite 12 an einer ebenen Stirnseite 21 des Vorsprungs 22 an. Wie bei der Ausführungsform nach Fig. 2 verhindert der Vorsprung 15, dass die erste, der Hammerbürste 2 zugewandte Windung 9' der Feder 10 in den Bereich zwischen der Buchse 14 und der Hammerbürste 2 gelangt. Die Buchse 14 selbst ist drehbar und dreht sich mit der Hammerbürste 2 mit, so dass eine Relativbewegung der ersten Windung 9' zur ihrer Auflage vermieden und dadurch die Reibung minimiert wird.

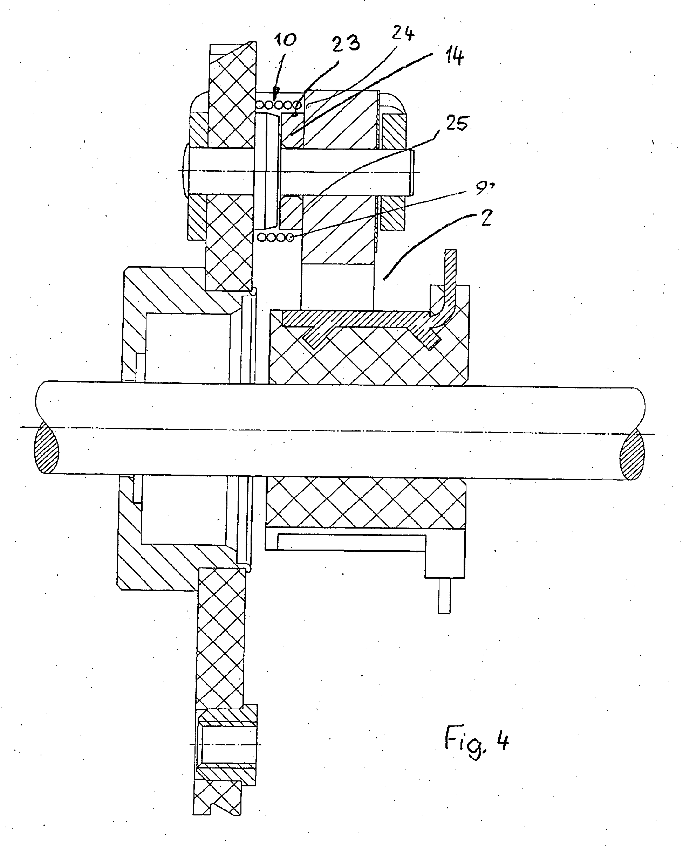

Das Ausführungsbeispiel gemäß Fig. 4 ist im wesentlichen gleich ausgebildet wie die Ausführungsform nach Fig. 3. Der Unterschied liegt darin, dass die Buchse 14 keinen radial äußeren Flansch hat, sondern daß ihr äußerer Mantel 23 zylindrisch ausgebildet ist. Die der Hammerbürste 2 benachbart liegende Windung 9' der Schenkelfeder 10 liegt dem die Buchse 14 radial überragenden Teil der Stirnseite 24 der Hammerbürste 2 gegenüber.

Der Spalt 25 zwischen der Hammerbürste 2 und der Buchse 14 ist so klein, daß die der Hammerbürste 2 benachbarte Windung 9' der Schenkelfeder 10 nicht in den Spalt 25 rutschen kann.

## Patentansprüche

1. Bürsteneinrichtung, insbesondere Hammerbürsteheinrichtung, für einen mechanisch kommutierten Elektromotor, mit mindestens einem Bolzen (3), auf dem eine Bürste (2) drehbar gelagert ist, die in Drehrichtung unter einer Kraft wenigstens einer Feder (10) steht, deren Windungen (9) den Bolzen (3) umgeben, bei der sich die der Bürste benachbarte Windung (9') der Feder (10) an einem drehbar auf dem Bolzen (3) sitzenden Abstützteil (13, 14) abstützt, welches sich mit der Bürste (2) mitdreht, **dadurch gekennzeichnet, dass** die Windungen (9) der Feder (10) einen mit einem Deckel (1) einstückig ausgebildeten Dom (6) oder einen als Teil des Bolzens (3) ausgebildeten Vorsprung (22) umgeben.

2. Bürsteneinrichtung nach Anspruch 1,
**dadurch gekennzeichnet, dass** das Abstützteil (13, 14) ein radial nach außen ragender Flansch (13) einer auf dem Bolzen (3) sitzenden Buchse (14) ist.

3. Bürsteneinrichtung nach Anspruch 2,
**dadurch gekennzeichnet, dass** die Bürste (2) auf der Buchse (14) sitzt.

4. Bürsteneinrichtung nach Anspruch 2 oder 3,
**dadurch gekennzeichnet, dass** die Bürste (2) am Flansch (13) anliegt.

5. Bürsteneinrichtung nach einem der Ansprüche 1 bis 4,
**dadurch gekennzeichnet, dass** das Abstützteil (13, 14) neben der Bürste (2) liegt.

6. Bürsteneinrichtung nach einem der Ansprüche 1 bis 5,
**dadurch gekennzeichnet, dass** das Abstützteil (13, 14) einen nach außen ragenden flanschartigen Vorsprung (15) aufweist, der verhindert, dass die Windung (9') der Feder (10) vom Abstützteil (13, 14) axial abrutscht.

7. Bürsteneinrichtung nach einem der Ansprüche 1 bis 6,
**dadurch gekennzeichnet, dass** das Abstützteil (13, 14) keinen nach außen ragenden flanschartigen Vorsprung (15) aufweist.

8. Bürsteneinrichtung nach Anspruch 7,
**dadurch gekennzeichnet, dass** der Spalt (25) zwischen Bürste (2) und Abstützteil (13,14) so klein ist, dass die Windung (9') der Feder (10) nicht in den Spalt (25) rutschen kann.

9. Bürsteneinrichtung nach einem der Ansprüche 1 bis 8,
**dadurch gekennzeichnet, dass** das Abstützteil (13, 14) an dem von dem Deckel (1) des Elektromotors nach innen abstehenden Dom (6) oder Vorsprung (22) anliegt.

10. Bürsteneinrichtung nach einem der Ansprüche 1 bis 9,
**dadurch gekennzeichnet, dass** der Vorsprung (22) an der Innenseite des Deckels (1) anliegt.

11. Bürsteneinrichtung nach einem der Ansprüche 1 bis 10,
**dadurch gekennzeichnet, dass** der Bolzen (3) im Dom (6) befestigt ist.

12. Bürsteneinrichtung nach einem der Ansprüche 1 bis 11,
**dadurch gekennzeichnet, dass** der Bolzen (3) den Deckel (1) und die Bürste (2) durchsetzt.

13. Bürsteneinrichtung nach einem der Ansprüche 1 bis 12,
**dadurch gekennzeichnet, dass** der Dom (6) mit Abstand von einer Ringwand (7) umgeben ist und dadurch ein Ringraum (8) gebildet wird.

14. Bürsteneinrichtung nach Anspruch 13,
**dadurch gekennzeichnet, dass** die Windungen (9) der Schenkelfeder (10) in den Ringraum (8) eingreifen.

## Claims

1. A brush device, in particular a hammer brush device, for a mechanically commutated electric motor, having at least one bolt (3), on which there is rotatably mounted a brush (2) which in a rotational direction is subjected to a force of at least one spring (10) whose coils (9) surround the bolt (3), with which brush device the coil (9'), of the spring (10), adjacent to the brush is supported on a support part (13, 14) rotatably sitting on the bolt (3), which support part (13, 14) rotates together with the brush (2),
**characterized in that** the coils (9) of the spring (10) surround a dome (6), in one piece with a cover (1), or a projection (22) formed as part of the bolt (3).

2. A brush device according to claim 1,
**characterized in that** the support part (13, 14) is a radially outwards projecting flange (13) of a bush (14) sitting on the bolt (3).

3. A brush device according to claim 2,
**characterized in that** the brush (2) sits on the bush (14).

4. A brush device according to claim 2 or 3,
**characterized in that** the brush (2) rests against the flange (13).

5. A brush device according to any one of claims 1 to 4,
**characterized in that** the support part (13, 14) lies alongside the brush (2).

6. A brush device according to any one of claims 1 to 5,
**characterized in that** the support part (13, 14) has an outwardly-projecting, flange-like projection (15) which prevents the coil (9') of the spring (10) from sliding axially from the support part (13, 14).

7. A brush device according to any one of claims 1 to 6,
**characterized in that** the support part (13, 14) does not have an outwardly-projecting, flange-like projection (15).

8. A brush device according to claim 7,
**characterized in that** the gap (25) between brush (2) and support part (13, 14) is so small that the coil (9') of the spring (10) cannot slide into the gap (25).

9. A brush device according to any one of claims 1 to 8,
**characterized in that** the support part (13, 14) rests against the dome (6) or projection (22) protruding inwards from the cover (1) of the electric motor.

10. A brush device according to any one of claims 1 to 9,
**characterized in that** the projection (22) rests against the inner side of the cover (1).

11. A brush device according to any one of claims 1 to 10,
**characterized in that** the bolt (3) is secured in the dome (6).

12. A brush device according to any one of claims 1 to 11,
**characterized in that** the bolt (3) passes through the cover (1) and the brush (2).

13. A brush device according to any one of claims 1 to 12,
**characterized in that** the dome (6) is surrounded by an annular wall (7) at a distance and an annular space (8) is thereby formed.

14. A brush device according to claim 13,
**characterized in that** the coils (9) of the leg spring (10) engage the annular space (8).

## Revendications

1. Dispositif à balais, en particulier dispositif à balais à marteau, pour un moteur électrique à commutation mécanique, comprenant au moins un axe (3), sur lequel est monté tournant un balai (2), soumis dans le sens de rotation à une force d'au moins un ressort (10) dont les spires (9) entourent l'axe (3), dispositif dans lequel la spire (9') du ressort (10), voisine du balai (2), s'appuie sur une pièce support (13, 14), qui repose en rotation sur l'axe (3) et tourne avec le balai (2),
**caractérisé en ce que** les spires (9) du ressort (10) entourent un dôme (6), réalisé d'une seule pièce avec un couvercle (1), ou une saillie (22), réalisée sous forme de partie de l'axe (3).

2. Dispositif à balais selon la revendication 1,
**caractérisé en ce que** la pièce support (13, 14) est une bride (13), qui dépasse vers l'extérieur dans la direction radiale, d'une douille (14) qui repose sur l'axe (3).

3. Dispositif à balais selon la revendication 2,
**caractérisé en ce que** le balai (2) repose sur la douille (14).

4. Dispositif à balais selon l'une des revendications 2 et 3,
**caractérisé en ce que** le balai (2) s'applique sur la bride (13).

5. Dispositif à balais selon l'une des revendications 1 à 4,
**caractérisé en ce que** la pièce support (13, 14) se situe à côté du balai (2).

6. Dispositif à balais selon l'une des revendications 1 à 5,
**caractérisé en ce que** la pièce support (13, 14) présente une saillie (15) en forme de bride, qui dépasse vers l'extérieur et empêche que la spire (9') du ressort (10) glisse de la pièce support (13, 14) dans la direction axiale.

7. Dispositif à balais selon l'une des revendications 1 à 6,
**caractérisé en ce que** la pièce support (13, 14) ne présente aucune saillie (15) en forme de bride dépassant vers l'extérieur.

8. Dispositif à balais selon la revendication 7,
**caractérisé en ce que** la fente (25) entre le balai (2) et la pièce support (13, 14) est si petite que la spire (9') du ressort (10) ne peut pas glisser dans la fente (25).

9. Dispositif à balais selon l'une des revendications 1 à 8,
**caractérisé en ce que** la pièce support (13, 14) s'applique sur le dôme (6) ou la saillie (22), qui dépassent vers l'intérieur du couvercle (1) du moteur électrique.

10. Dispositif à balais selon l'une des revendications 1 à 9,
**caractérisé en ce que** la saillie (22) s'applique sur le côté intérieur du couvercle (1).

11. Dispositif à balais selon l'une des revendications 1 à 10,
**caractérisé en ce que** l'axe (3) est fixé dans le dôme (6).

12. Dispositif à balais selon l'une des revendications 1 à 11,
**caractérisé en ce que** l'axe (3) traverse le couvercle (1) et le balai (2).

13. Dispositif à balais selon l'une des revendications 1 à 12,
**caractérisé en ce que** le dôme (6) est entouré à distance par une paroi annulaire (7) et un espace annulaire (8) est formé de ce fait.

14. Dispositif à balais selon la revendication 13,
**caractérisé en ce que** les spires (9) du ressort à branches (10) s'engagent dans l'espace annulaire (8).
